# EUROPEAN PATENT APPLICATION

(11) **EP 1 453 043 A1**
(43) Date of publication of application: **01.09.2004**
(21) Application number: 02780112.5
(22) Date of filing: 15.11.2002
(51) Int. Cl.: G11B 7/007, G11B 7/24, G11B 7/26, G11B 23/40

(54) **DISC, DISC MANUFACTURING METHOD, RECORDING/REPRODUCING SYSTEM, AND SEMICONDUCTOR RECORDING APPARATUS**

(30) Priority: 30.11.2001 JP 2001367158
(71) Applicant: SONY CORPORATION, Tokyo 141 (JP)
(72) Inventor: SUZUKI, Ippei, c/o SONY CORPORATION, Tokyo 141-0001 (JP); NISHITANI, Kiyoshi, c/o SONY CORPORATION, Tokyo 141-0001 (JP); MATSUMURA, Mitsunori, c/o SONY CORPORATION, Tokyo 141-0001 (JP); OBATA, Manabu, c/o SONY CORPORATION, Tokyo 141-0001 (JP)
(74) Representative: Goddard, Frances Anna
(86) International application number: PCT/JP2002/011961
(87) International publication number: WO 2003/049093

(57) **Abstract**

It is a disc in which it is possible to know with ease what contents are recorded on which disc without reproducing the contents of the disc, and a fabrication method as well as a recording reproducing system thereof. A recording surface (110) of an optical disc (100) is formed as an inner area (111A), a clamping area (111B), a transition area (113), an information recording area (114), and a rim area (115), each of an annular shape and aligned from the inner side to the outer side of the radial direction. Disc identification information is recorded in the transition area (113) of the optical disc (100) as a format for recording information in the transition area (113) mentioned above. Further, the disc identification information recorded on the optical disc (100) is provided in a spot on the optical disc (100) so as to be visible from outside.

## Description

### TECHNICAL FIELD

The present invention relates to a disc on and from which contents can be recorded and reproduced, a method of fabricating same, and a recording reproducing system for recording and reproducing contents on and from such a disc.

### BACKGROUND ART

In recent years, the recording and reproducing of contents, such as television programs, music and so on, on and from high storage capacity discs such as optical discs or magneto-optical discs such as DVDs are beginning to be realized.

A large amount of contents can be recorded on such discs with a large capacity. Therefore, in order to find which content is recorded on which disc, there is a need to load each disc into the recording reproducing apparatus and to play them, and there lies a problem in that it is tedious and troublesome.

In addition, a similar problem as in discs applies to semiconductor recording apparatus such as memory cards.

As such, an object of the present invention lies in the provision of a disc in which it is possible to know, with ease, what contents are recorded on which disc without reproducing the contents of the disc, as well as a fabricating method and recording reproducing system thereof.

In addition, another object of the present invention lies in the provision of a semiconductor recording apparatus in which it is possible to know, with ease, what contents are recorded on which semiconductor recording apparatus without reproducing the contents of the semiconductor recording apparatus.

### DISCLOSURE OF THE INVENTION

In order to achieve the objects above, a disc of the present invention is a disc in which a center hole provided at the center of the disc, a disc holding area extending outward from the center hole mentioned above in a circle, a transition area that is not utilized for information recording and which extends outward from the disc holding area mentioned above in a circle, and an information recording area for recording information extending outward in a circle from the transition area mentioned above are formed, and the information recording area mentioned above comprises a first annular area located on the inner radial direction side and in which information is recorded unrewritably, and a second annular area located on the outer radial direction side of the first annular area mentioned above and in which information is recorded rewritably, the disc mentioned above characterized in that an annular area comprising the transition area mentioned above and the first annular area mentioned above is set as a third annular area, disc identification information uniquely assigned to the disc mentioned above is recorded in the third annular area mentioned above, and further, the disc identification information mentioned above is provided in a spot on the disc so as to be visible from outside.

Thus, because the disc identification information uniquely assigned to a disc is recorded in the third annular area of the disc, it becomes possible to store, with a recording reproducing apparatus for the disc, content identification information and content subject information in association with the disc identification information. Also, because the disc identification information is provided in a spot on the disc so as to be visible from outside, it becomes possible to know, with ease, what contents are recorded on which disc without reproducing the contents of the disc.

In addition, a method of fabricating a disc according to the present invention is a method of fabricating a disc in which an information recording area for recording information is formed, and is characterized in that it includes a first step for forming a disc holding area extending outward in a circle from a center hole provided at the center of the disc mentioned above, a transition area that is not utilized for information recording and which extends outward in a circle from the disc holding area mentioned above, and an information recording area for recording information which extends outward in a circle from the transition area mentioned above, and for forming in the information recording area mentioned above a first annular area located on the inner radial direction side and in which information is recorded unrewritably and a second annular area located on the outer radial direction side of the first annular area mentioned above and in which information is recorded rewritably, a second step for recording disc identification information uniquely assigned to the disc mentioned above in a third annular area comprising the transition area mentioned above and the first annular area mentioned above, and a third step for providing the disc identification information mentioned above in a spot on the disc so as to be visible from outside.

Thus, because the disc identification information uniquely assigned to a disc is recorded in the third annular area of the disc, if contents are recorded on the disc while content identification information for identifying the contents and content subject information regarding the subject of the contents are recorded on the disc, it becomes possible to store, with a recording reproducing apparatus for the disc, the content identification information and the content subject information in association with the disc identification information. Also, because the disc identification information is provided in a spot on the disc so as to be visible from outside, it becomes possible to know, with ease, what contents are recorded on which disc without reproducing the contents of the disc.

In addition, a recording reproducing system of the present invention is characterized in that it includes a disc and a recording reproducing apparatus, the disc mentioned above is configured such that information can be recorded and reproduced, disc identification information uniquely assigned to the disc is recorded as a format for storing information on the disc, and further the disc identification information mentioned above is provided in a spot on the disc so as to be visible from outside in a format different from the format for storing information mentioned above, and the recording reproducing apparatus includes recording means for recording, on the disc mentioned above loaded into the recording reproducing apparatus, contents, content identification information assigned to each of the contents mentioned above, and content subject information which is information regarding the subject of the contents mentioned above, reproducing means for reading and reproducing the disc identification information mentioned above which is recorded as a format for storing information on the disc mentioned above, the contents, the content identification information, and the content subject information, memory means for associating and storing the disc identification information mentioned above, the content identification information, and the content subject information reproduced by the reproducing means, and searching means for searching for information from among the disc identification information mentioned above, the content identification information, and the content subject information recorded in the memory means mentioned above.

Thus, the content identification information and the content subject information are stored in the memory means of the recording reproducing apparatus in association with the disc identification information, which is uniquely assigned to the disc, of the disc loaded into the recording reproducing apparatus.

Accordingly, with the searching means, the content identification information and the content subject information of the memory means can be searched for based on the disc identification information which is visible from outside, and the disc identification information mentioned above which is visible from outside can be searched for based on the content subject information.

In addition, a semiconductor recording device of the present invention is a semiconductor recording apparatus in which memory means, in which information is rewritable, and a main body housing the memory means mentioned above are provided integrally, and is characterized in that identification information uniquely assigned to the semiconductor recording apparatus mentioned above in advance is stored in the memory means mentioned above, and further the identification information mentioned above is provided in a spot on the main body mentioned above so as to be visible from outside in a format different from a format for recording information in the memory means mentioned above.

Thus, because the identification information uniquely assigned to the semiconductor recording device is recorded, if contents are recorded on the memory means mentioned above while content identification information for identifying the contents and content subject information regarding the subject of the contents are recorded in the memory means, it becomes possible to store, with a recording reproducing apparatus for the semiconductor recording device, the content identification information and the content subject information in association with the identification information.

In addition, because the identification information is provided in a spot on the main body so as to be visible from outside, it becomes possible to know, with ease, what contents are recorded on which semiconductor recording apparatus without reproducing the contents of the semiconductor recording apparatus.

### BRIEF DESCRIPTION OF THE DRAWINGS

FIG. 1 is a perspective view showing the configuration of an optical disc of the present mode;
FIG. 2 is a schematic view outlining the physical format of the optical disc of the present mode;
FIG. 3 is an explanatory diagram of the process for manufacturing the disc of the present mode;
FIG. 4 is an explanatory diagram of the process for recording disc identification information on an optical disc and a disc case;
FIG. 5 is a diagram of the overall configuration of a recording reproducing system of the present mode;
FIG. 6 is a block diagram showing the configuration of the recording reproducing system of the present mode;
FIG. 7 is an explanatory diagram showing the contents recorded in a memory section of a recording reproducing apparatus in the recording reproducing system of the present mode;
FIG. 8 is an explanatory diagram of additional information recorded in broadcasted contents, commercially sold software, and already recorded video cassettes;
FIGS. 9A to 9C are explanatory diagrams showing embodiments in which means for recording identification information are provided on a disc, and FIG. 9A is a perspective view showing a recording example in which a sticker is used, FIG. 9B is a perspective view showing a recording example in which a bar code label is used, and FIG. 9C is a perspective view showing an example in which a memory is used;
FIG. 10A is an explanatory diagram of an optical disc in which a marking layer is formed, and FIG. 10B is a cross-sectional view showing the configuration of the optical disc;
FIG. 11 is an explanatory diagram showing a configuration example of a case for housing an optical disc:
FIG. 12A, FIG. 12B and FIG. 12D are explanatory diagrams of a state in which an optical disc is housed in a case, and FIG. 12C is an explanatory diagram showing a state in which cases are lined up;
FIG. 13 is an explanatory diagram showing a state in which an optical disc is housed in a disc housing file;
FIG. 14A is an explanatory diagram showing a state in which disc identification information indicated in the form of a combination of numbers is provided on an end surface of an optical disk, and FIG. 14B is an explanatory diagram showing a state in which disc identification information indicated in the form of a bar code is provided on an end surface of an optical disk; and
FIG. 15A is an explanatory diagram showing a state in which identification information is provided on a surface of a semiconductor recording apparatus, and FIG. 15B is an explanatory diagram showing a state in which identification information is provided on an end surface of a semiconductor recording apparatus.

### BEST MODES FOR CARRYING OUT THE INVENTION

Below, modes for carrying out the present invention are described in accordance with the appended drawings.

### (Configuration of Optical Disc)

An optical disc will be described.

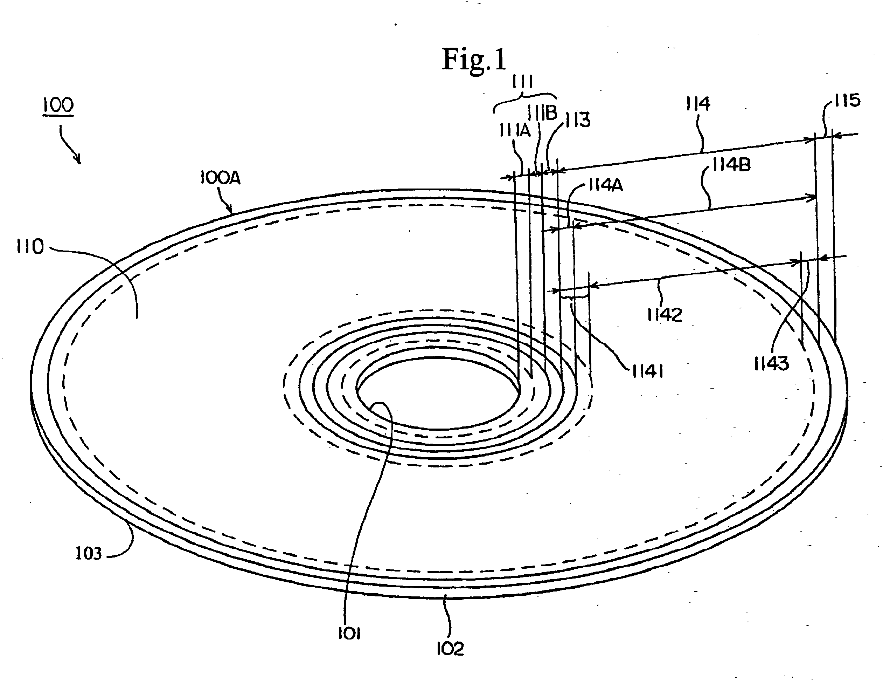

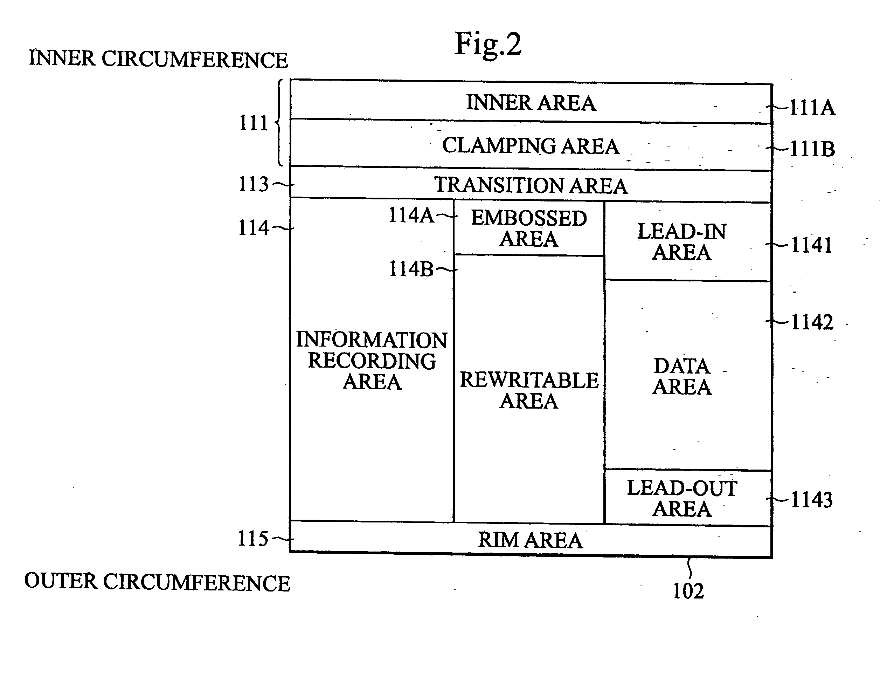

FIG. 1 is a perspective view showing the configuration of an optical disc as one example of a disc of the present mode, and FIG. 2 is a schematic diagram outlining the physical format of the optical disc of the present mode.

As shown in FIG. 1 and FIG.2, an optical disc 100 has a disc-shaped substrate 100A, and a center hole 101 is formed at the center of the substrate 100A.

An annular recording surface 110 is formed on one surface of the substrate 100A mentioned above. The recording surface 110 includes a disc holding area 111, a transition area 113, an information recording area 114 and a rim area 115, each formed in a circle and aligned from the inner side towards the outer side in the radial direction. The recording and reproducing of information on and from the recording area 114 mentioned above are done by having a laser beam irradiated with an optical pickup from the side of the recording surface 110 mentioned above.

An annular surface (hereinafter referred to as base surface) 103 is formed on the other surface of the substrate 100A mentioned above, in other words on a surface on the side opposite the recording surface 110. In the present example, disc identification information, which will be described later, is recorded on this base surface 103. Also, the base surface mentioned above is the surface on the side on which text and images are printed in audio CDs and CD-Rs.

The disc holding area 111 mentioned above is an area for clamping the optical disc 100 with known clamping mechanisms, and as shown in FIG. 2, is configured with an inner area 111A provided on the inner side and a clamping area 111B provided on the outside of the inner area 111A.

The transition area 113 is a portion formed between the disc holding area 111 mentioned above and the information recording area 114, and is an area in which information is not recorded. The rim area 115 is a portion formed between the information recording area 114 and an outer edge section 102 of the optical disc 100, and is an area in which information is not recorded.

The information recording area 114 is configured with an embossed area 114A formed on the inner radial direction side of the optical disc 100 and a rewritable area 114B formed on the outer radial direction side of the embossed area.

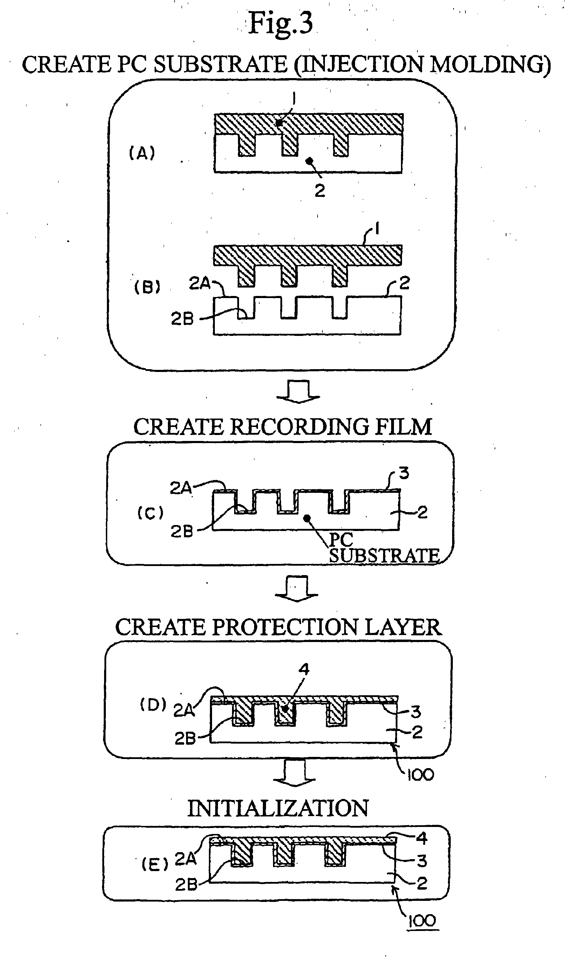

The embossed area 114A is an area in which information is recorded unrewritably. The recording of information in the embossed area 114A mentioned above is performed by providing recessed pits through a molding process. This molding process is carried out simultaneously with the molding process of FIGS. 3(A) and (B) described next.

Since information is recorded by the recessed pits in the embossed area 114A mentioned above, rewriting this information is impossible.

The rewritable area 114B includes pits (provided through a molding process) indicating address information within the optical disc 100, and is an area in which information is rewritable. The recording of information in the rewritable area 114B mentioned above is done by forming, with a laser beam irradiated from the pickup, pit-shaped patterns on a recording film of a groove or a land through a crystalline state and a non-crystalline state.

The information recording area 114 is configured with the embossed area 114A mentioned above and the rewritable area 114B. However, as shown in FIG. 1 and FIG. 2, the format of the information recording area 114 is divided, from the inside, into a lead-in area 1141, a data area 1142, and a lead-out area 1143.

The lead-in area 1141 is configured with the whole of the embossed area 114A and, of the rewritable area 114B, a portion that is adjacent to the embossed area 114A.

As lead-in information, disc general information (e.g., rotation speed, disc kind, tracking information and so on), a laser power calibrating area, defect management information and so on are recorded in this lead-in area 1141.

The lead-out area 1143 is configured with a portion of the information recording area 114 closer to the outer circumference, and defect management information and so on are recorded as lead-out information.

The data area 1142 is an area of the information recording area 114 sandwiched between the lead-in area 1141 mentioned above and the lead-out area 1143, and is an area in which content is recorded rewritably.

In addition, in the present mode, the optical disc 100 mentioned above may be made, for example, a phase-change optical disc in which information is rewritable as described above. This phase-change optical disc is configured such that the recording and reproducing of information are done making use of the fact that the recording film thereof is reversibly changed between a crystalline state and a non-crystalline (amorphous) state, and the reflectivity of the recording film varies between the crystalline state mentioned above and the non-crystalline (amorphous) state.

### (Fabricating the Optical Disc)

Next, steps for fabricating the optical disc will be described.

FIG. 3 is an explanatory diagram of the fabricating process for the disc of the present mode.

First, a PC substrate 2 (corresponding to the substrate 100A in FIG. 1) is injection molded by filling melted polycarbonate into a mold having a stamper 1 (FIGS. 3(A) and (B)). Thus, lands 2A and grooves 2B are formed on the PC substrate 2. As described above, recessed portions for forming pits in the embossed area 114A described above and the rewritable area 114B are provided on the stamper 1. The pits mentioned above are formed by this injection molding.

Subsequently, a recording film 3, on which recording through phase-change is possible, is formed on the PC substrate 2 (FIG. 3(C)), and a protection layer 4 is formed on the recording film 3 (FIG. 3(D)). Subsequently, initialization of the recording film 5 is performed by irradiating a laser beam on or heating the recording film 3 (FIG. 3(E)), and thus, the optical disc 100 having a recording surface 110 composed of the disc holding area 111, the transition area 113, the information recording area 114, and the rim area 115, each of an annular shape, is completed.

### (Features of Disc)

In the present invention, disc identification information unique to each optical disc 100 configured in the manner described above is assigned, and is recorded on the respective optical disc 100. Further, the disc identification information recorded on the optical disc 100 is provided on the optical disc 100 so as to be visible from outside. This will be described below.

The disc identification information is information that is uniquely assigned to each optical disc 100, and may be generated, for example, as a series of serial numbers, and may be generated as random numbers, and need only be information that differs between each optical disc 100.

In addition, the disc identification information may be configured by a combination of numbers or characters, such as the alphabet, or both.

### (Formation of Disc Identification Information in Third Annular Area)

The recording of disc identification information on the optical disc 100 will be described with reference to FIG. 1.

The disc identification information is information that is uniquely assigned to each optical disc 100. This disc identification information needs to be recorded on the optical disc 100 in such a form as to be readable, when loaded into a recording reproducing apparatus that records on and reproduces from this optical disc, by a pickup of this recording reproducing apparatus.

In addition, although the embossed area 114A for recording unrewritable information is set in the information recording area 114, a stamper is required in order to form pits in this embossed area 114A, and it is unrealistic to prepare a different stamper for each optical disc.

Accordingly, it is necessary for the disc identification information to be recorded in a recording format that is different from the format for recording information in the information recording area 114.

For this reason, the transition area 113 and the embossed area 114A are utilized as areas for recording the disc identification information.

The disc identification information is recorded by forming, in the circumferential direction with intervals in between, a plurality of rectangles having a length in the radial direction of the optical disc and a width in the circumferential direction. The disc identification information is represented by a combination of dense and sparse intervals in the circumferential direction between the plurality of rectangles, or by a combination of large and small dimensions in the width direction of the plurality of rectangles. The rectangles mentioned above can be formed in the following manner.

Because a phase-change recording film is also provided on the portions of the transition area 113 and the embossed area 114A, the formation of the rectangles is performed through a phase-change of the phase-change recording film by an irradiation of a laser beam on the phase-change recording film. In other words, it is a recording through a laser marking process.

In addition, since the portions of the transition area 113 and the embossed area 114A are covered with a protection film,'the formation of the rectangles is performed through a printing process on the surface of the protection film mentioned above.

Alternatively, if the optical disc is a magneto-optical disc, a reflective film made of aluminum or the like is also formed on the portions of the transition area 113 and the embossed area 114A. For this reason, the formation of the rectangles is performed by removing the reflective film by irradiating a laser beam on the reflective film. In other words, it is a recording through a laser trimming process.

Alternatively, the rectangles may be formed on the portions of the transition area 113 and the embossed area 114A through an emboss process.

The rectangles thus formed have a reflectivity that is different from the portions other than the rectangles. Therefore, reading with a pickup becomes possible.

In addition, it is optional whether, as an area for recording the disc identification information, the whole of the transition area 113 and the embossed area 114A is used or a portion is used. In the present mode, a description will be given where the disc identification information is recorded in the transition area 113.

### (Formation of the Disc Identification Information in a Visible Spot)

The disc identification information mentioned above is also provided in a spot that is visible from outside. The recording of the disc identification information provided in a spot that is visible from outside is performed in a format that is different from the format for recording information in the third annular area.

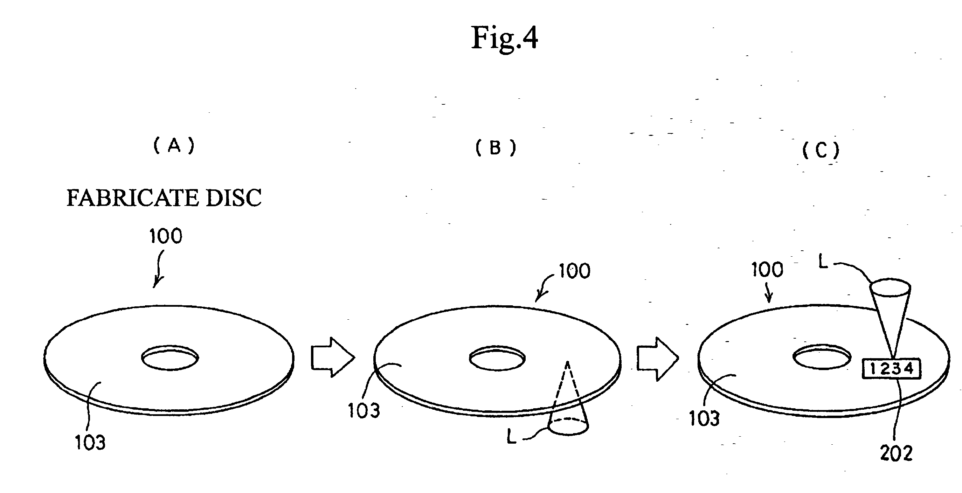

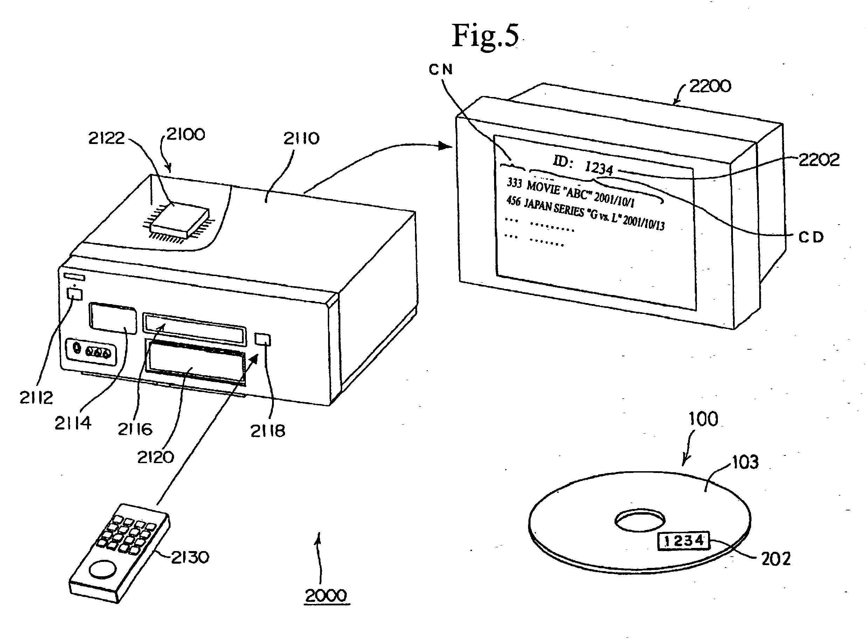

In the present example, the disc identification information is provided visibly on the base surface 103 of the optical disc 100 mentioned above. In FIG. 4 and FIG. 5, reference numeral 202 indicates the disc identification information provided in a spot visible from outside.

The disc identification information recorded on the surface 103 mentioned above need only be such that it is not repeated among the plurality of discs 100 possessed by the user and is readily identifiable by sight by the user, and therefore, for example, displaying a figure of three or four digits should suffice. Hence, for practical purposes, it can be considered sufficient to record, on the base surface 103, the last 3 or 4 digits of the disc identification information recorded on the optical disc 100.

In other words, if the disc identification information recorded in a spot in the transition area 113 of the optical disc 100 is composed of a combination of N digits of characters, then the disc identification information 202 provided on the base surface 103 mentioned above need only be indicated with a combination of the last M digits (where M < N) of characters from the combination of the N digits of characters including the very last digit.

Various visible formats of the disc identification information mentioned above are conceivable. For example, the disc identification information may be recorded and provided on the optical disc 100.

FIG. 4 is an explanatory diagram of steps for recording the disc identification information on the optical disc.

Initially, the optical disc 100 is fabricated by the steps described above (FIG. 4(A)).

Subsequently, the disc identification information assigned to the optical disc 100 is recorded by giving a phase-change in the phase-change recording film (FIG. 4(B)) by, for example, irradiating a laser beam on the transition area 113 of the optical disc 100 with a laser marking apparatus L.

Subsequently, of the disc identification information mentioned above, the disc identification information 202 composed of the last four digits (e.g., "1234") is provided by irradiating a laser beam on the base surface 103 of the optical disc 100 with the laser marking apparatus L (FIG. 4(C)).

In addition, as a method of recording the disc identification information on the base surface 103, any method such as engraving, ultrasonic pen marking, air pen marking, ink jet printing and the like may be employed.

In addition, it is also possible to provide the disc identification information 202 on the base surface 103 through the following steps.

Initially, the disc identification information is recorded on the optical disc 100 by a method such as laser marking, heating or the like.

Subsequently, the disc identification information of the optical disc 100 is read by a pickup, and based on the read disc identification information, the disc identification information 202 is provided, as in the description above, on the base surface 103 through laser marking or any method described above.

In addition, the disc identification information 202 can also be provided on the base surface 103 through the following steps.

Initially, the disc identification information is recorded on the optical disc 100 by a method such as laser marking, heating or the like.

Subsequently, based on the disc identification information, the disc identification information 202 is provided, as in the description above, on the base surface 103 through laser marking or any method described above.

In other words, the step of reading the disc identification information from the optical disc 100 may be omitted, the disc identification information may be recorded on the optical disc 100, and based on that disc identification information, the disc identification information 202 may be provided on the base surface 103.

### (Recording Reproducing System)

The configuration of a recording reproducing system for recording on and playing the above-described disc 100 will be described next.

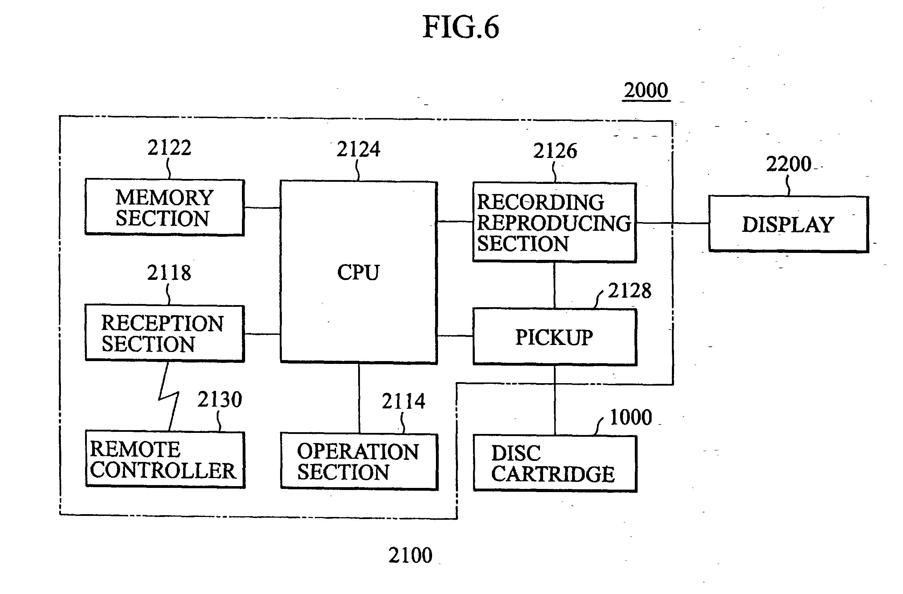

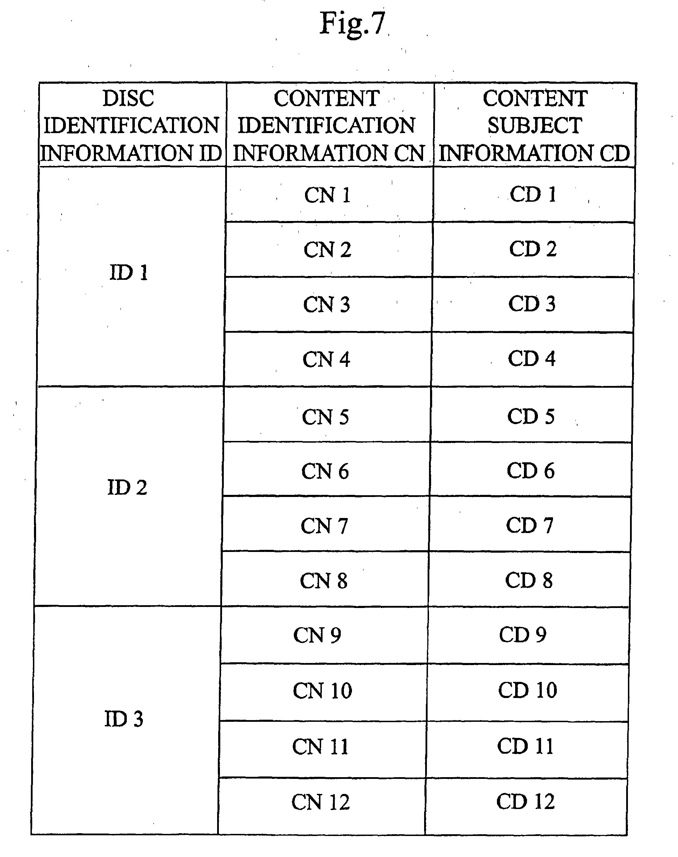

FIG. 5 is a configuration diagram of the overall recording and reproducing system in the present mode, FIG. 6 and FIG. 7 are block diagrams showing the configuration of the recording and reproducing system in the present mode.

As shown in FIG. 5 and FIG. 6, a recording reproducing system 2000 is configured with the disc 100, a recording reproducing apparatus 2100, a display 2200 and so on.

As shown in FIG. 5, the recording reproducing apparatus 2100 includes a housing 2110, a power switch 2112, an operation section 2114, a disc tray 2116, a reception section 2118, a display section 2120 for displaying the operation status or the like and a memory section 2122 provided in the housing 2110. The operation section mentioned above is a section for performing operations such as play, stop, fast forward, rewind, eject and so on.

The disc tray 2116 is provided movably between a protruding position at which the tray protrudes to the front of the housing 2110 and a housed position at which the tray is housed in the inner side of the housing 2110, and is configured such that the receiving or taking out of the disc 100 is made possible at the protruding position. Also, it is configured such that when the disc tray 2116 in which the disc 100 is received moves to the housed position, recording on and reproducing from the disc 100 with a pickup 2128 (see FIG. 6) provided inside the housing 2110 become possible.

The reception section 2118 is a section for receiving a wireless control signal (infrared signal) transmitted from a remote control 2130.
Performing remote operations just like operating the operation section 2114 by operating the remote control 2130 is made possible.

As shown in FIG. 6, in addition to the configuration above, the recording reproducing apparatus 2100 includes a CPU 2124, a recording reproducing section 2126 and the pickup 2128.

The CPU 2124 controls the operation section 2114, the reception section 2118, the memory section 2122, the recording reproducing section 2126, and the pickup 2128.

The recording reproducing section 2126 has the function of processing a reproduced signal reproduced from the optical disc 100 by means of the pickup 2128 and outputting it as a signal that can be displayed by the display 2200, and the function of inputting to the pickup 2128 a recording signal of information to be recorded and recording the information on the optical disc 100.

The pickup 2128 is a device for irradiating a light beam onto the optical disc 100 to carry out recording and reproduction of information. In other words, based on the inputted recording signal, the pickup records information (contents, content identification information and content subject information which will be described later on) in a rewritable area of the information recording area of the optical disc, and the pickup reads information recorded in the embossed area and the rewritable area of the optical disc 100 and outputs a reproduced signal.

Further, the remote control 2130 and the operation section 2114 are configured such that content subject information, which will be described later on, can be inputted manually. The inputted content subject information is inputted from the recording reproducing section 2126 to the pickup 2128 as a recording signal under the control of the CPU 2124, and is managed and recorded in the data area of the rewritable area of the optical disc.

Next, the operation of the recording reproducing system 2000 described with FIG. 5 and FIG. 6 will be described.

A description is given below taking as an example a case in which an optical disc is loaded to record and reproduce a television program.

When the optical disc 100 is loaded, under the control of the CPU 2124, recording and reproducing of information on and from the optical disc 100, and recording and reproducing of information to and from the memory section 2122 are performed.

The content, the content identification information, the content subject information to be recorded on the optical disc 100 will be described.

The content is information of the program itself, is information including image data, audio data, text data and so on, and is recorded in the data area 1142.

The content identification information is assigned to each content recorded in the data area 1142, and is one that is assigned such that it is not repeated at least within the same optical disc. The content identification information is generated by the CPU 2124, for example, and is managed and recorded in the data area 1142 portion of the optical disc 100.

The content subject information is information including information regarding, for each content recorded in the data area 1143 of the optical disc 100, the subject of the content, such as the title, keywords, broadcasted date and time, recording time of the program, text data indicating a summary of the program, audio data, image data (thumbnail). The content subject information is generated, for example, when a user operates the operation section 2114 or the remote control 2130, and is managed and recorded in the data area 1142 portion of the optical disc 100.

The format (format) of the content subject information may be set in advance and it may be inputted in accordance with this format.

Now, information recorded in the embossed area 114A of the lead-in area 1141 and information recorded in the lead-out area 1143 will be described.

As shown in FIG. 1 and FIG. 2, of the lead-in area 1141 of the optical disc 100, in the embossed area 114A are recorded, for example, disc general information (disc type, linear velocity, tracking information and so on), an adjusting signal and the like as unrewritable information. Therefore, with respect to this embossed area 114A, no operation for recording information from the recording reproducing apparatus 2100 will be performed, and only reproduction of information is performed.

Of the lead-in area 1141, an area corresponding to the rewritable area 114B is utilized for laser power calibration, and disc defect management information and the like are recorded.

Lead-out information such as disc defect management information and the like is also recorded in the lead-out area 1143.

Next, information recorded in the memory section 2122 of the recording reproducing apparatus 2100 will be described.

FIG. 7 is an explanatory diagram showing the recorded contents in the memory section of the recording reproducing apparatus of the recording reproducing system in the present mode.

As shown in FIG. 7, in the memory section 2122, for each disc identification information ID (ID1, ID2, ID3, ...) recorded on the optical disc 100, content identification information CN (CN1, CN2, CN3, CN4, CN5, ...) and content subject information CD (CD1, CD2, CD3, CD4, CD5, ...) are recorded in association.

Therefore, the CPU 2124 can carry out searching operations with respect to the information stored in the memory section 2122. For example, the content identification information CN and the content subject information CD can be searched for with the disc identification information ID as a key. Alternatively, the disc identification information ID and the content identification information CN can be searched for with the content subject information CD as a key.

The recording of the disc identification information ID, the content identification information CN and the content subject information CD to the memory section 2122 is performed when contents are recorded on the optical disc 100 loaded into the recording reproducing apparatus 2100.

Alternatively, it is performed when contents are reproduced from the optical disc 100 on which contents are already recorded and which is loaded into the recording reproducing apparatus 2100.

In addition, the generation of the content identification information CN by the CPU 2124 is performed based on the contents of the disc identification information ID and content identification information CN stored in the memory section 2122 so that it is not repeated among a plurality of content identification information CD corresponding to the same disc identification information ID.

In addition, the generation of the content subject information CD by the CPU 2124 is created and inputted by the user operating the operation section 2114 and the remote control 2130. Therefore, in the present example, the content subject information CD includes program title, broadcasted date and time, broadcasted duration, information illustrating the outline of the program (text information) and so on which can be inputted by means of the operation section 2114 and the remote control 2130. In addition, if the recording reproducing apparatus 2100 is configured to be connectable to a computer, image information such as thumbnails or audio information can be recorded in the memory section 2122 as the content subject information CD using the computer.

In addition, the memory section 2122 may be configured with a semiconductor memory, a hard disc or the like for example. Also, because the storage capacity of the memory section 2122 is finite, it may be configured such that if the information stored in the memory section 2122 reaches the storage capacity, of the information stored in the memory section 2122, information with the oldest date and time of recording is sequentially deleted, and new information is recorded.

Next, a searching operation using the disc identification information, the content identification information and the content subject information recorded on the optical disc 100 will be described with reference to FIG. 5 through FIG. 7.

As shown in FIG. 5, it is assumed that there are a plurality of optical discs 100 on which contents have already been recorded. The disc identification information 202 provided on the base surface 103 of each disc 100 is indicated with the numbers of the last four digits of the disc identification information ID as described above. It is assumed that each disc identification information 202 is, for example, "1234," "5678," "0001," "3333," "0111," "6666."

First, a searching operation in a case where the subject of the contents recorded on the optical disc 100, whose disc identification information 202 is "1234," will be described.

By operating the remote control 2130 (or the operation section 2114) and inputting the disc identification information 202 "1234" provided visibly on the disc 100, of which the subject of the contents the user wants to know, a searching operation that takes the disc identification information 202 "1234" as a key is instructed.

In accordance with an instruction for a searching operation received via the reception section 2118, the CPU 2124 performs a search with respect to the memory section 2122 with the disc identification information 202 "1234" as a key.

Then, the search result thereof is outputted on the display 2200. In other words, as displayed in FIG. 5, the disc identification information 202 "1234" indicated with numbers of the last 4 digits of the disc identification information ID as in the disc identification information mentioned above is displayed, while at the same time the content identification information CN: "333", "456", ...is displayed. Then, corresponding to the respective content identification information CN, information such as the content subject information CD: "movie 'ABC,' 2001/10/01," "Japan Series 'G vs. L,' 2000/10/13," ...are shown in a list. In the example of FIG. 5, program titles and starting date of recording are included as the content subject information CD.

Therefore, the user is able to know the content subject information CD recorded on a desired optical disc 100 without actually loading the optical disc 100 into the recording reproducing apparatus 2100.

In addition, if one wants to know on which optical disc 100 a certain content is recorded, a search is performed as follows.

Initially, a search operation with information included in the content subject information CD, for example a keyword, as a key is instructed by operating the remote control 2130 (or the operation section 2114).

The CPU 2124 searches the memory section 2122 with the keyword above as a key.

Then, the search result is outputted on the display 2200.

For example, disc identification information 2202 that corresponds to one or two ore more keywords is displayed on the display 2200, while the content identification information CN and the content subject information CD corresponding to each disc identification information 2202 are displayed in a list. In so doing, the disc identification information displayed on the display 2200 is displayed with, for example, a four-digit number as in the disc identification information 202 provided visibly on the optical disc 100.

Therefore, the user is able to specify the optical disc 100 on which the desired contents are recorded based on the disc identification information 202 provided on the optical disc 100.

In other words, the user is able to know the optical disc 100 on which the desired contents are recorded by'means of the disc identification information 2202 displayed on the display without actually loading the optical disc 100 into the recording reproducing apparatus 2100.

Further, by recording and managing information such as addresses of the respective contents recorded in the data area 1142 of the optical disc 100 in association with the content identification information CN, the recording reproducing apparatus 2100 can be equipped with the following functions by utilizing the content subject information.

For example, in a state where certain disc identification information 2202, the content identification information CN and the content subject information CD corresponding to that disc identification information 2202 are displayed on the display 2200, the content identification information CN, which one wants to reproduce, is inputted in the CPU 2124 through an operation of, for example, the operation section 2114 or the like.

Next, the optical disc 100 corresponding to the displayed disc identification information 2202 is loaded into the recording reproducing apparatus 2100.

The CPU 2124 performs a content reproducing operation by controlling the pickup 2128 and the recording reproducing section 2126 by reading from the data area 1142 in which addresses of contents associated with the content identification information CN specified above with respect to the loaded optical disc 100 are centrally managed.

Further, if the recording duration over which contents are recorded is included in the content subject information CD, it may be configured such that the recordable time is calculated and displayed on the display section 2120 of the recording reproducing apparatus by subtracting, by means of the CPU 2124, the total sum of the recorded duration of each content from the duration of the unrecorded area of the optical disc 100.

Further, it can also be configured such that a selection of a recordable optical disc is performed by comparing the remaining amount and the duration of the contents to be recorded.

Further, it can also be configured such that the recording quality is adjusted so that all of the contents can be recorded on the selected optical disc.

In addition, in addition to being created and inputted by having a user operate the operation section 2114 or the remote control 2130 as described above, the content identification information CN and the content subject information CD may be created using additional information transmitted along with a program from a broadcasting station.

Further, in recording contents from commercially sold software or recorded video cassettes on an optical disc, it is also possible to create the content identification information CN and the content subject information CD using additional information recorded on these software and video cassettes.

Such additional information will be explained below.

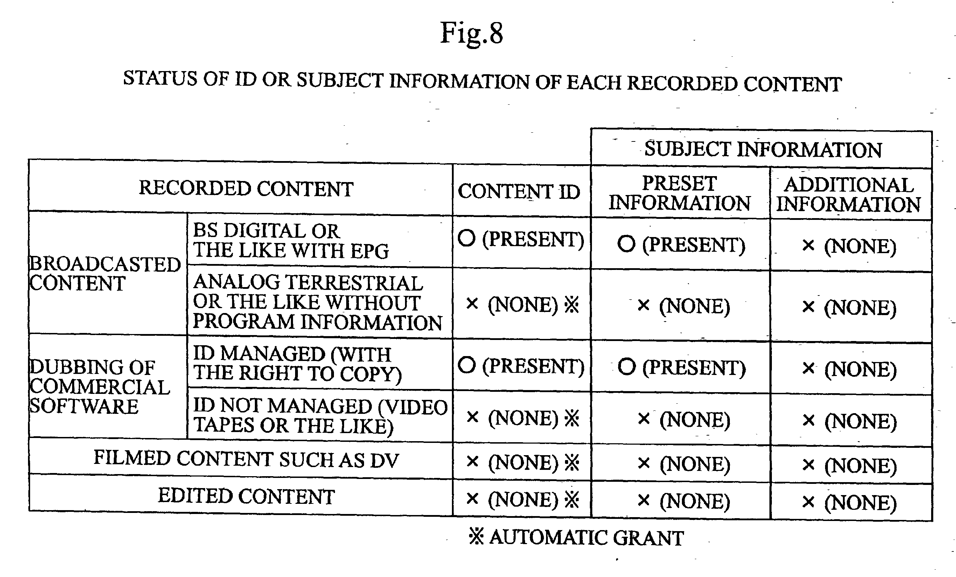

FIG. 8 is an explanatory diagram of additional information recorded in broadcasted contents, commercially sold software, and recorded video cassettes.

First, a case in which a broadcasted content is recorded on the optical disc 100 will be described.

In digital satellite broadcast and terrestrial digital broadcast such as BS digital broadcast and CS digital broadcast in Japan, EPG (Electronic Program Guide) is added to contents as additional information. In this EPG are included a content ID uniquely assigned to the program and subject information indicating the subject of the program. The subject information includes information such as program title, program title, broadcasted time slot, broadcasted duration and so on.

In FIG. 8, the subject information is composed of preset information that is currently already set and other additional information. This additional information is information which the user can create additionally.

Therefore, the content ID mentioned above can be utilized as the content identification information CN and the subject information mentioned above can be utilized as the content subject information CD.

If there is no additional information corresponding to the EPG mentioned above such as in analog terrestrial and the like, it is necessary that the content identification information CN be generated with the recording reproducing apparatus 2100 and that the content subject information CD be inputted from the operation section 2114 or the remote control 2130.

Next, a case in which commercially sold software is recorded on the optical disc 100 will be described.

Of commercially sold software, with respect to those in which additional information including a content ID or subject information similar to the EPG above (those that are sold with the right to copy) are recorded, the content identification information CN and the content subject information CD can be recorded on the optical disc 100 using the content ID and the subject information as in the case of BS digital broadcast mentioned above.

Further, of commercially sold software, with respect to those in which additional information is not recorded (for example commercially sold video tapes and the like), it is necessary that the content identification information CN be generated with the recording reproducing apparatus 2100 and that the content subject information CD be inputted from the operation section 2114 or the remote control 2130.

Next, a case in which contents already filmed with a digital video (DV) or contents edited by users are recorded on the optical disc 100 will be described.

In these cases, because there is no additional information that corresponds to the above-described EPG, with respect to these, it is necessary that the content identification information CN be generated with the recording reproducing apparatus 2100 and that the content subject information CD be inputted from the operation section 2114 or the remote control 2130.

### (Other Formats for the Disc Identification Information Visible from Outside)

In the mode described above, the disc identification information ID is recorded on the optical disc 100 while the disc identification information 202 was provided on the base surface 103, which is a spot that is visible from outside.

However, as will be described below, the disc identification information 202 may be provided on the optical disc 100 in a format different from the above in addition to providing it on the base surface 103 of the optical disc 100 or instead of providing it on the base surface 103.

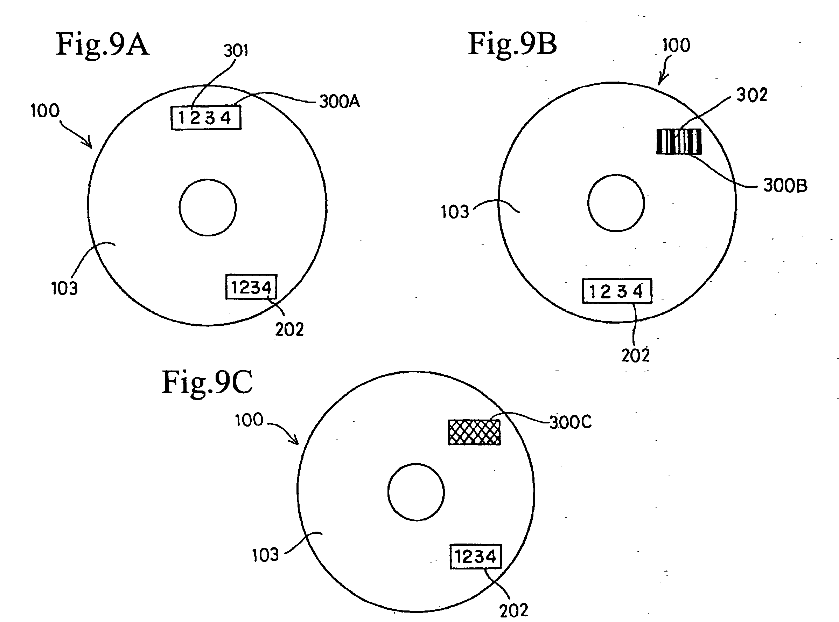

FIG. 9A through FIG. 9C are explanatory diagrams showing modes in which means for recording disc identification information is provided on an optical disc. FIG. 9A is a perspective view showing a recording example in which a sticker is used, FIG. 9B is a perspective view showing a recording example in which a bar code label is used, and FIG. 9C is a perspective view showing an example in which a memory is used.

In other words, as shown in FIG. 9A, a sticker 300A on which disc identification information 301 of the same format (displayed with a combination of characters) as the disc identification information 202 provided on the optical disc 100 is printed may be adhered to the base surface 103, which is a spot that is visible from outside, in the fabrication process for the optical disc 100.

As shown in FIG. 9B, a bar code label 300B on which disc identification information 302, in which a disc identification information ID recorded on the optical disc 100 of the optical disc 100 is indicated in the form of a bar code, is printed may be adhered to the base surface 103, which is a spot that is visible outside, in the fabrication process for the optical disc 100.

In this case, a bar code reading apparatus may be provided in the recording reproducing apparatus 2100 or on the remote control 2130. Alternatively, a dedicated bar code reading apparatus may be provided separate from the recording reproducing apparatus. And it can be configured such that the disc identification information 302 is read from the bar code label 300B mentioned above with this bar code reading apparatus. In this case, the disc identification information 302 can be read from the bar code label 300B without playing the optical disc 100 with the pickup.

As shown in FIG. 9C, a magnetic recording section 300C in which the disc identification information ID recorded on the optical disc 100 is recorded magnetically may be provided on the base surface 103 in the fabrication process for the optical disc 100.

In this case, a reading apparatus capable of reading information in the magnetic recording section 300C may be provided in the recording reproducing apparatus 2100, and it may be configured such that the disc identification information ID is read from the magnetic recording section 300C mentioned above with this reading apparatus. In this case, the disc identification information can be read from the magnetic recording section 300C without playing the optical disc 100 with the pickup.

In addition, although not shown in drawing, a memory in which the disc identification information ID recorded on the optical disc 100 is stored may be provided on the base surface 103 in the fabrication process for the disc 100.

In this case, a memory reading apparatus capable of reading information in the memory may be provided in the recording reproducing apparatus 2100 and it may be configured such that the disc identification information ID is read from the memory mentioned above with this memory reading apparatus. In this case, the disc identification information can be read from the memory without playing the optical disc 100 with the pickup.

The memory mentioned above may be of either form of a so-called contact type in which a contact terminal is exposed to the outside or of a so-called non-contact type in which a contact terminal is not exposed.

Further, while in the mode shown in FIG. 4, an example in which the disc identification information 202 was provided on the base surface 103 of the optical disc 100 by irradiating a laser beam with the laser marking apparatus L was described, it may be configured such that a marking layer made of a marking material suitable for laser marking is formed in advance on the surface of the base surface 103 of the optical disc and laser marking is performed on this marking layer.

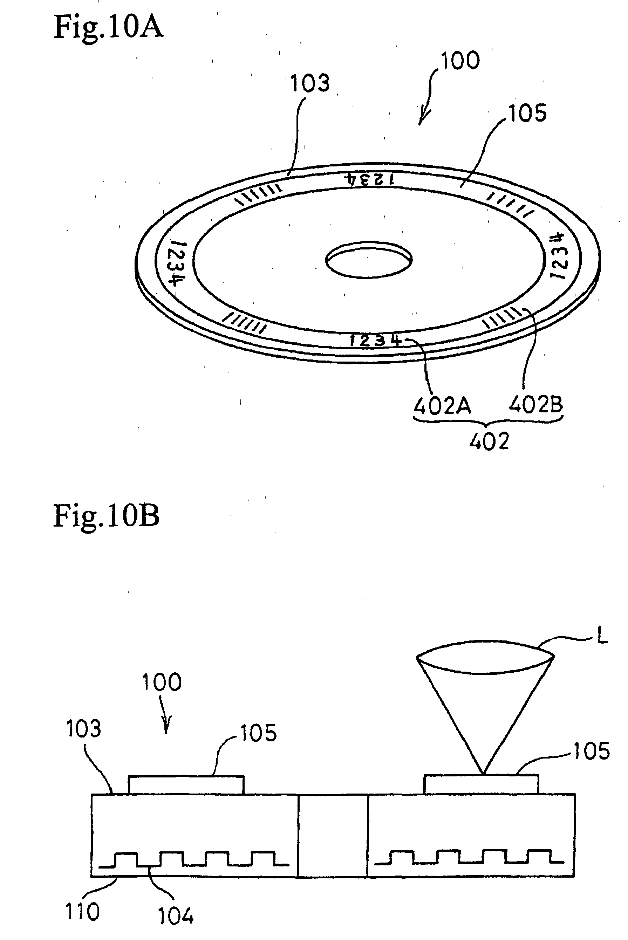

FIG. 10A is an explanatory diagram for an optical disc on which a marking layer is formed, and FIG. 10B is a cross-sectional view showing the configuration of the optical disc of FIG. 10A.

The optical disc 100 has a recording layer 104 formed internally, and an annular marking layer 105 is formed on the surface of the base surface 103.

When the marking layer 105 is provided on the optical disc 100 in such a manner, because disc information 402 is recorded on the marking layer 105 by a laser beam irradiated onto the marking layer 105 from the laser marking apparatus L, recording can be performed more appropriately as compared to a case in which laser marking is performed on the base surface 103.

The recording format of the disc identification information 402 on the marking layer 105 may be in the form of a number (reference numeral 402A) or of a bar code (reference numeral 402B). As shown in FIG. 10A, if a plurality of the disc identification information is provided in the circumferential direction of the marking layer 105 with intervals in between, there is an advantage in that visually confirming the disc identification information from any direction becomes easier.

### (Case for Housing Optical Disc)

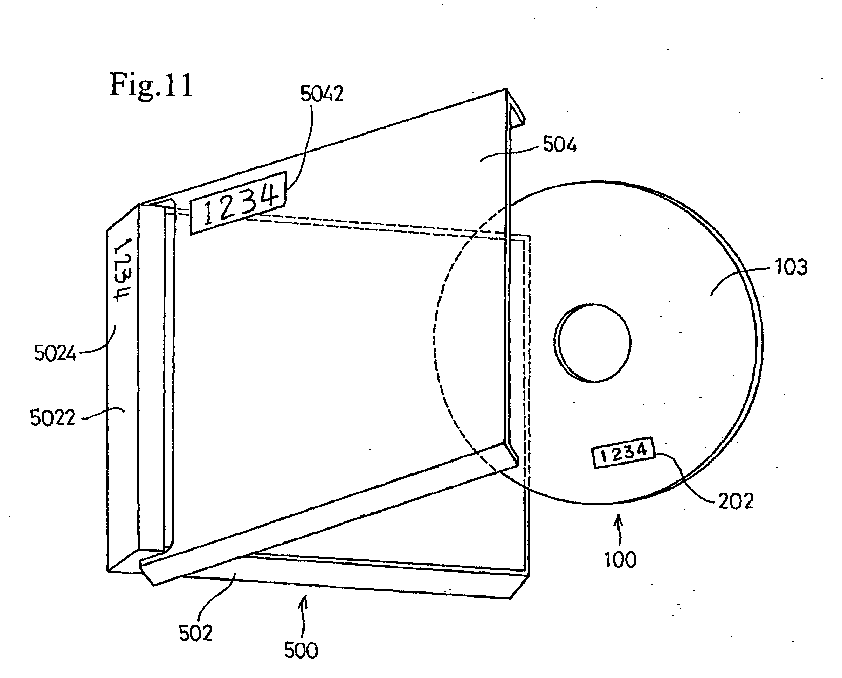

FIG. 11 is an explanatory diagram showing a configuration example of a case for housing an optical disc.

A case 500 is composed of a main body 502 and a lid 504.

A housing recessed portion for housing the optical disc 100 is formed in the main body 502. Disc identification information 5024 identical to the disc identification information 202 provided on the base surface 103 of the optical disc 100 is provided on an end surface 5022 of one of the four sides of the main body 502 so as to be visible from the outside of the case 500.

The lid 504 is formed in a rectangular plate shape and is configured such that it is attached to the main body 502 through a hinge section and opens and closes the housing recessed portion mentioned above. Disc identification information 5042 identical to the disc identification information 202 provided on the base surface 103 of the optical disc 100 is provided on the surface of the lid 504 so as to be visible from the outside of the case 500.

By closing the lid 504 under a condition where the optical disc 100 is housed in the housing recessed portion of the main body 502 mentioned above, the optical disc 100 is housed inside the case 500..

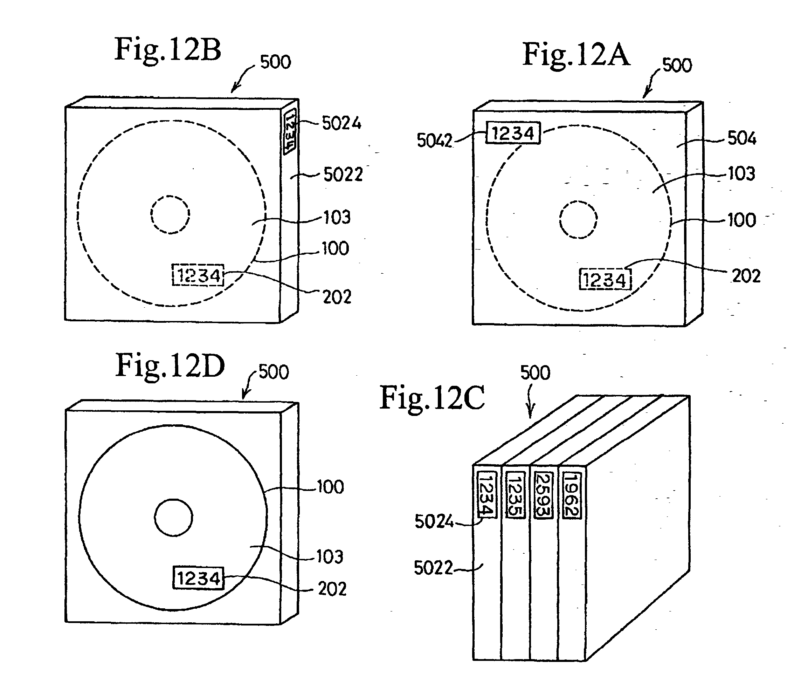

Accordingly, as shown in FIG. 12A, when the disc identification information is provided on the lid of the case, even if the lid 504 of the case 500 is made of an opaque material and the optical disc 100 inside is not visible, the disc identification information 202 of the optical disc 100 can be viewed with ease.

Further, as shown in FIG. 12B, if the disc identification information 5024 is provided on the end surface 5022 of the case 500, by lining up a plurality of the cases 500 so that they overlap in the direction of the thickness of the cases 500 and the position of each end surface 5022 is aligned, the disc identification information provided on each end surface 5022 is visible at a glance as shown in FIG. 12C.

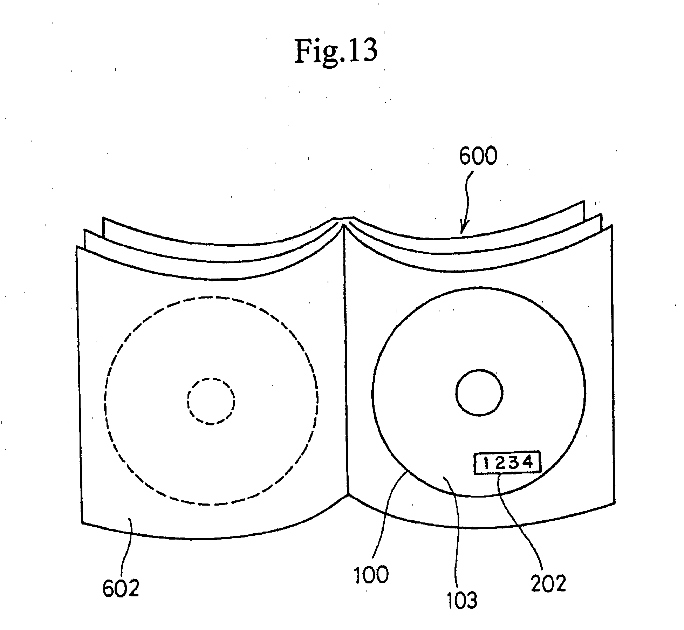

In addition, as shown in FIG. 12D, if the lid 504 of the case 500 is formed of a transparent material, naturally, the disc identification information 202 of the optical disc 100 on the inner side to the lid 504 can be seen through. Further, as shown in FIG. 13, if a disc housing file 600 configured by binding pockets 602 formed of a transparent material and like a booklet is used, the disc identification information 202 of the optical disc 100 housed within the pocket 602 can be seen through from the outside of the pocket 602.

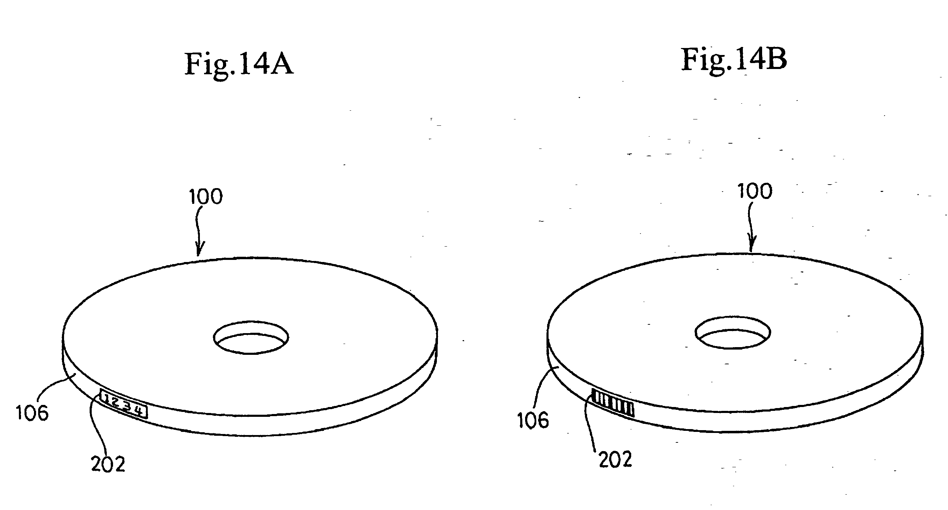

The spot on the optical disc at which the disc identification information visible from outside is provided may be either of the surfaces in the direction of the thickness of the optical disc, and as shown in FIGS. 14A and 14B, may also be an end surface 106 facing the outer radial direction of the optical disc 100. As in the case described above, as shown in FIG. 14A, the disc identification information may be indicated with a combination of numbers, or as shown in FIG. 14B, it may be indicated with a bar code.

In addition, while in the modes above, a phase-change optical disc was used for the disc, the present invention is not limited thereto, and can of course be applied to, for example, a magneto-optical disc used in MDs and so on or a pigment change type disc used in CD-Rs and so on.

### (Semiconductor Recording Apparatus)

In the modes described above, a case in which disc identification information unique to an optical disc was assigned to the optical disc was described. For example, even in a semiconductor recording device in which memory means and a main body for accommodating the memory means are provided integrally as in memory cards, assigning identification information that is unique to the semiconductor recording apparatus is conceivable.

In this case, too, providing the identification information on the semiconductor recording apparatus so as to be visible from outside is effective in knowing what contents are recorded on which semiconductor recording device without reproducing the contents stored in the semiconductor recording device.

Below, a configuration in which identification information is provided visibly on a semiconductor recording apparatus will be described.

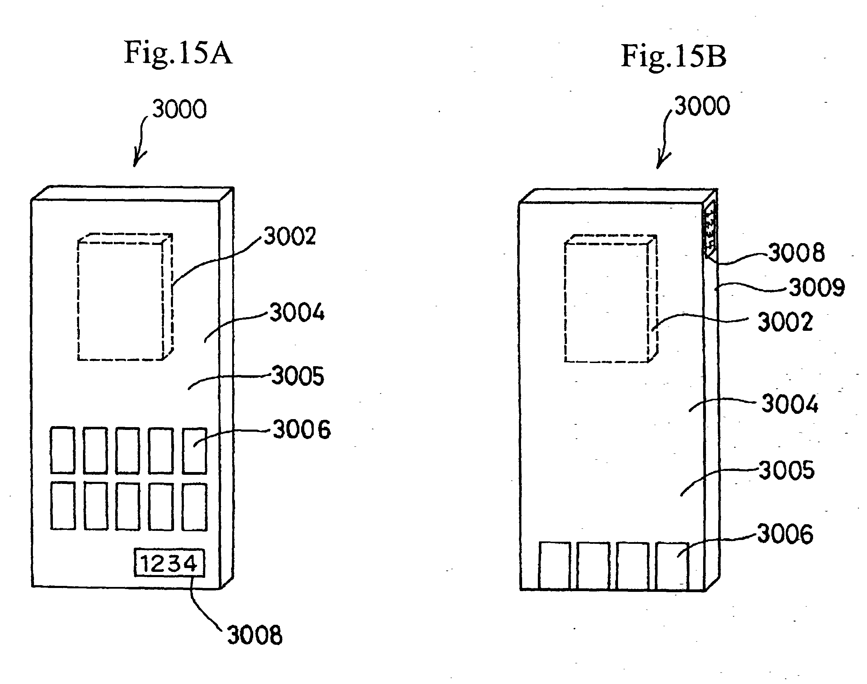

FIG. 15A is a configurational diagram showing one example of a semiconductor recording apparatus on which the identification information is provided so as to be visible from outside.

In the semiconductor recording apparatus 3000, memory means 3002 configured with a semiconductor memory or the like on which information containing contents is rewritable and a main body 3004 for housing the memory means 3002 are configured integrally.

Identification information uniquely assigned to the semiconductor recording apparatus 3000 mentioned above in advance is stored in the memory means mentioned above.

The main body 3004 mentioned above is configured in a rectangular plate shape having a thickness, and a plurality of terminals 3006 are provided on one of surfaces 3005 in the thickness direction such that they are exposed towards the outside. Each of the terminals 3006 is connected to the memory means 3002, and are configured such that power feeding to, and the recording and reproducing of information on and from the memory means 3002 are performed via the terminals 3006.

The identification information 3008 mentioned above is provided on the surface 3005 which is a spot that is visible from the outside of the main body 3004 mentioned above. Because the identification information recorded on the surface 3005 mentioned above need only be such that it is not repeated among a plurality of the semiconductor recording devices 3000 owned by a user and that it is visibly and readily identifiable, it would suffice to display, for example, a number of roughly 3 or 4 digits. Accordingly, it can be regarded sufficient for practical purposes to record, of the identification information recorded in the semiconductor recording apparatus 3000, the last 3 or 4 digits on the surface 3005.

In other words, if the identification information mentioned above is composed of a combination of N digits of characters, then the identification information 3008 provided on the main body 3004 need only be indicated with a combination of the last M digits (where M < N) of characters from the combination of the N digits of characters including the very last digit.

As a method of recording the identification information mentioned above, any method such as engraving, ultrasonic pen marking, air pen marking, ink jet printing and the like may be employed..

Further, the identification information provided so as to be visible from outside may be provided on a sticker adhered to the main body mentioned above.

Further, the identification information provided so as to be visible from outside may be displayed as a bar code.

Further, the identification information provided so as to be visible from outside may be may be configured to be optically reproducible.

Further, as shown in FIG. 15B, the identification information 3008 provided so as to be visible from outside may be provided on an end surface 3009 of one of the four sides of the main body 3004 of the semiconductor recording apparatus 3000.

In the semiconductor recording device 3000 thus configured, too; because the identification information uniquely assigned to the semiconductor recording device is recorded, if contents are recorded in the memory means 3002 mentioned above while content identification information for identifying the contents as well as content subject information regarding the subject of the contents are recorded in the memory means 3002, it becomes possible to store the content identification information and the content subject information in association with the identification information through a recording reproducing apparatus for the semiconductor recording device.

Further, since the identification information is provided in a spot on the main body 3004 so as to be visible from outside, it becomes possible to know with ease what contents are recorded on which semiconductor recording device without reproducing the contents of the semiconductor recording device.

As described above, according to the disc of the present invention and the fabrication method thereof, because the disc identification information uniquely assigned to the disc is recorded, it becomes possible to store the content identification information and the content subject information in association with the disc identification information.

It becomes possible to search for the content identification information and the content subject information based on the disc identification information visible from the outside of the case, and to search for the disc identification information provided on the disc so as to be visible from the outside of the disc mentioned above based on the content subject information. And it becomes possible to know with ease what contents are recorded on which disc without reproducing the contents of the disc.

Further, according to the recording reproducing system of the present invention, the content identification information and the content subject information are stored in the memory means of the recording reproducing apparatus so as to be associated with the disc identification information. Therefore, by means of the searching means, the content identification information and the content subject information can be searched for based on the disc identification information that is visible from outside, and the disc identification information mentioned above that is visible from outside can be searched for based on the content subject information.

Therefore, it is possible to know with ease what contents are recorded on which disc without reproducing the contents of the disc.

Further, according to the semiconductor recording device of the present invention, it is possible to know with ease what contents are recorded on which semiconductor recording device without reproducing the contents stored in the semiconductor recording device.

Because the identification information uniquely assigned to the semiconductor recording device is recorded in the memory means as a format for recording information in the memory means, if contents are recorded in the semiconductor recording means while the content identification information for identifying contents as well as the content subject information regarding the subject of the contents are recorded in the memory means, it becomes possible to store the content identification information and the content subject information in association with the identification information through a recording reproducing apparatus for the semiconductor recording device.

Thus, it becomes possible to search for the content identification information and the content subject information based on the identification information that is visible from outside, and to search for the identification information provided so as to be visible from outside based on the content subject information. And it becomes possible to know with ease what contents are recorded in which semiconductor recording device without reproducing the contents of the semiconductor recording device.

## Claims

1. A disc in which a center hole, a disc holding area extending outward in a circle from said center hole, a transition area that is not used for information recording and which extends outward in a circle from said disc holding area, and an information recording area for recording information and which extends outward in a circle from said transition area are formed, and in which said information recording area is configured with a first annular area located on the inner radial direction side and in which information is recorded unrewritably, and a second annular area located on the outer radial direction side of said first annular area and in which information is recorded rewritable the disc **characterized in that**
an annular area comprising said transition area and said first annular area is set as a third annular area,
disc identification information uniquely assigned to said disc is recorded in said third annular area, and
said disc identification information is provided in a spot on said disc so as to be visibly from outside.

2. The disc according to Claim 1 **characterized in that** a format for recording information in said third annular area is a recording format that is different from a format for recording information in said information recording area.

3. The disc according to Claim 1 **characterized in that** said first annular area and an area of said second annular area on the inner radial direction side adjacent to said first annular area are configured as a lead-in area in which lead-in information can be recorded, and an area of said second annular area other than said lead-in area is configured as a data area in which content information can be recorded and a lead-out area in which lead-out information can be recorded.

4. The disc according to Claim 3 **characterized by** being configured such that content identification information assigned to each content and which is for identifying the contents recorded in said data area and content subject information regarding the subject of the contents recorded in said data area are recorded in said data area.

5. The disc according to Claim 1 **characterized in that** said disc identification information recorded in said third annular area is done by forming a plurality of rectangles in the circumferential direction each having a length in the radial direction of said disc and a width in the circumferential direction with intervals in between.

6. The disc according to Claim 5 **characterized in that** said disc identification information recorded in said third annular area is represented by a combination of sparseness and denseness of said intervals in the circumferential direction between said plurality of rectangles.

7. The disc according to Claim 5 **characterized in that** said disc identification information recorded in said third annular area is represented by a combination of largeness and smallness of dimensions of said plurality of rectangles in the width direction.

8. The disc according to Claim 5 **characterized in that** the formation of said rectangles is carried out by a laser marking process or a laser trimming process.

9. The disc according to Claim 5 **characterized in that** a phase-change recording film is provided on said third annular area of said disc and the formation of said rectangles is carried out through a phase-change in said phase-change recording film by an irradiation of a laser beam onto said phase-change recording film.

10. The disc according to Claim 5 **characterized in that** the formation of said rectangles is carried out by a molding process.

11. The disc according to Claim 1 **characterized in that** said disc identification information provided so as to be visible from outside is configured to be optically reproducible.

12. The disc according to Claim 1 **characterized in that** said disc identification information provided so as to be visible from outside is configured to be reproducible with a pickup that optically reproduces information in said information recording area.

13. The disc according to Claim 1 **characterized in that** said disc identification information provided so as to be visible from outside is composed of a combination of characters.

14. The disc according to Claim 13 **characterized in that** said characters include at least one of a number and the alphabet.

15. The disc according to Claim 1 **characterized in that** sub-memory means for storing the disc identification information recorded in said third annular area is provided on said disc, and that the information stored in said sub-memory means is configured to be readable in a contact method or a non-contact method.

16. The disc according to Claim 1 **characterized in that** said disc identification information provided so as to be visible from outside is provided on a sticker adhered to said disc.

17. The disc according to Claim 1 **characterized in that** said disc identification information provided so as to be visible from outside is displayed as a bar code.

18. The disc according to Claim 1 **characterized in that** the disc identification information recorded in said third annular area is composed of a combination of N digits of characters, and said disc identification information provided so as to be visible from outside is composed of a combination of the last M digits (where M < N) of characters of said combination of N digits of characters including the very last digit.

19. The disc according to Claim 1 **characterized in that** the spot on said disc where said disc identification information is provided so as to be visible from outside is either one of the surfaces of said disc in the thickness direction.

20. The disc according to Claim 1 **characterized in that** the spot on said disc where said disc identification information is provided so as to be visible from outside is an end surface facing the outer radial direction of said disc.

21. The disc according to Claim 1 **characterized in that** said disc identification information provided so as to be visible from outside is formed by a laser marking process or a laser trimming process.

22. The disc according to Claim 1 **characterized in that** said disc identification information provided so as to be visible from outside is formed by printing.

23. A fabricating method for a disc in which an information recording area for recording information is formed, said disc fabricating method **characterized in that** it includes:
a first step of forming a disc holding area extending outward in a circle from a center hole provided at the center of said disc, a transition area that is not used for information recording and which extends outward in a circle from said disc holding area, and an information recording area for recording information and which extends outward in it circle from said transition area, and of forming, in said information recording area, a first annular area located on the inner radial direction side thereof and in which information is recorded unrewritably, and a second annular area located on the outer radial direction side of said first annular area and in which information is recorded rewritably;
a second step of recording disc identification information uniquely assigned to said disc in a third annular area comprising said transition area and said first annular area; and
a third step of providing said disc identification information in a spot on said disc so as to be visible from outside.

24. The disc fabricating method according to Claim 23 **characterized in that** a format for recording information in said third annular area is a format for recording that is different from a format for recording information in said information recording area.

25. The disc fabricating method according to Claim 23 **characterized in that**, in said first step, said first annular area and an area on the inner radial direction side of said second annular area adjacent to said first annular area are formed as a lead-in area in which lead-in information can be recorded, while an area of said second annular area other than said lead-in area is formed as a data area in which content information can be recorded and a lead-out area in which lead-out information can be recorded.

26. The disc fabricating method according to Claim 23 **characterized in that** the recording of said disc identification information in said third annular area by said second step is carried out by forming a plurality of rectangles in the circumferential direction each having a length in the radial direction of said optical disc and a width in the circumferential direction with intervals in between.

27. The disc fabricating method according to Claim 26 **characterized in that** said disc identification information recorded in said second step is represented by a combination of sparseness and denseness of said intervals in the circumferential direction between said plurality of rectangles.

28. The disc fabricating method according to Claim 26 **characterized in that** said disc identification information recorded in said second step is represented by a combination of largeness and smallness of dimensions of said plurality of rectangles in the width direction.

29. The disc fabricating method according to Claim 26 **characterized in that** the formation of said rectangles by said second step is carried out by a laser marking process.

30. The disc fabricating method according to Claim 26 **characterized in that** the formation of said rectangles by said second step is carried out by a molding process.

31. The disc fabricating method according to Claim 26 **characterized in that** a phase-change recording film is provided on said third annular area of said disc and the formation of said rectangles by said second step is carried out through a phase-change in said phase-change recording film by an irradiation of a laser beam onto said phase-change recording film.

32. The disc fabricating method according to Claim 23 **characterized in that** said disc identification information recorded in said second step is recorded in an optically reproducible format.

33. The disc fabricating method according to Claim 23 **characterized in that** said disc identification information recorded in said second step is recorded in a format that is reproducible with a pickup which optically reproduces information in said information recording area.

34. The disc fabricating method according to Claim 23 **characterized in that** said disc identification information recorded in said second step is composed of a combination of characters.

35. The disc fabricating method according to Claim 34 **characterized in that** said characters include at least one of numbers and the alphabet.

36. The disc fabricating method according to Claim 23 **characterized in that** said disc identification information recorded in a spot in said third annular area in said second step is composed of a combination of N digits of characters, and **in that** said disc identification information provided in said third step so as to be visible from outside is composed of a combination of the last M (where M < N) digits of characters of said combination of N digits of characters including the very last digit.

37. The disc fabricating method according to Claim 23 **characterized in that** a spot on the disc where said disc identification information is provided in said third step is either one of the surfaces of said disc in the thickness direction.

38. The disc fabricating method according to Claim 23 **characterized in that** the spot on said disc where said disc identification information is provided so as to be visible from outside in said third step is an end surface facing the outer radial direction of said disc.

39. The disc fabricating method according to Claim 23 **characterized in that** the formation of the disc identification information in a spot on said disc in said third step is carried out by a laser marking process or a laser trimming process.

40. The disc fabricating method according to Claim 23 **characterized in that** the formation of the disc identification information in a spot on said disc in said third step is carried out by printing.

41. A recording reproducing system comprising a disc and a recording reproducing apparatus, the recording reproducing system **characterized in that**
said disc is configured so that recording and reproducing information are possible, disc identification information uniquely assigned to said disc is recorded, and further, said disc identification information is provided in a spot on the disc so as to be visible from outside, and
said recording reproducing apparatus comprises recording means for recording, on said disc loaded into said recording reproducing apparatus, a content, content identification information assigned to each content, and content subject information, which is information regarding the subject of said content, reproducing means for reading and reproducing said disc identification information, which is recorded as a format for recording information on said disc, the content, the content identification information, and the content subject information recorded, memory means for associating and storing said disc identification information, said content identification information, and said content subject information reproduced by said reproducing means, and searching means for searching for information from said disc identification information, the content identification information, and the content subject information recorded in said memory means.

42. The recording reproducing system according to Claim 41 **characterized in that** there is formed in said disc a center hole provided at the center, a disc holding area extending outward in a circle from said center hole, a transition area that is not used for information recording and which extends outward in a circle from said disc holding area, and an information recording area for recording information and which extends outward in a circle from said transition area, **in that** said information recording area is configured with a first annular area located on the inner radial direction side and in which information is recorded unrewritably and a second annular area located on the outer radial direction side of said first annular area and in which information is recorded rewritably, **in that** an annular area comprising said transition area and said first annular area is set as a third annular area, and **in that** said disc identification information is recorded in a spot in said third annular area.

43. The recording reproducing system according to Claim 42 **characterized in that** the recording format of the disc identification information recorded in said third annular area is different from the recording format of said content identification information and said content subject information.

44. The recording reproducing system according to Claim 41 **characterized in that** said first annular area and an area of said second annular area on the inner radial direction side adjacent to said first annular area are configured as a lead-in area in which lead-in information can be recorded, and an area of said second annular area other than said lead-in area is configured as a data area in which content information can be recorded and a lead-out area in which lead-out information can be recorded.

45. The recording reproducing system according to Claim 41 **characterized in that** the recording of said content identification information and said content subject information is carried out in the second annular area portion located at said third annular area.

46. The recording reproducing system according to Claim 41 **characterized in that** the information search by said searching means is one that searches for said content identification information and the content subject information with said disc identification information as a key.

47. The recording reproducing system according to Claim 41 **characterized in that** the information search by said searching means is one that searches for said disc identification information with said content subject information as a key.

48. The recording reproducing system according to Claim 41 **characterized in that** display means for displaying information found by said searching means is provided.

49. The recording reproducing system according to Claim 41 **characterized in that** information generating means for generating said content identification information and the content subject information is provided, and **in that** said recording means is configured so as to record on said disc said content identification information and the content subject information outputted from said information generating means.

50. The recording reproducing system according to Claim 49 **characterized in that** said information generating means comprises operating means for inputting information through a manual operation, and **in that** the generation of said content subject information by said information generating means is carried out through an operation on said operating means.

51. The recording reproducing system according to Claim 50 **characterized in that** additional information including at least one of a content ID for identifying said content and subject information regarding the subject of said content is added to said content, and **in that** said information generating means carries out at least one of generating said content identification information based on said content ID and generating said content subject information based on said subject information.

52. The recording reproducing system according to Claim 51 **characterized in that** said content is a broadcast program broadcasted by BS digital broadcast, CS digital broadcast, or terrestrial digital broadcast, and **in that** said additional information is electronic program information broadcasted in correspondence with said broadcast program.

53. The recording reproducing system according to Claim 41 **characterized in that** said content is a broadcast program, and **in that** said content subject information includes at least one of a program title of said broadcast program, a program title, a broadcasted time slot, a broadcasted time, an outline of the program, and information indicating a keyword of the program.

54. The recording reproducing system according to Claim 41 **characterized in that** said content subject information includes information of at least one of the forms of text, image, and audio.

55. A semiconductor recording device in which memory means in which information is rewritable and a main body accommodating said memory means are provided integrally, the semiconductor recording device **characterized in that**
identification information uniquely assigned to said semiconductor recording device in advance is stored in said memory means, and further
said identification information is provided in a spot on said main body so as to be visible from outside and in a format that is different from a format for recording information in said memory means.

56. The semiconductor recording device according to Claim 55 **characterized in that** said identification information provided so as to be visible from outside is configured to be optically reproducible.

57. The semiconductor recording device according to Claim 55 **characterized in that** said identification information provided so as to be visible from outside is composed of a combination of characters.

58. The semiconductor recording device according to Claim 57 **characterized in that** said characters include at least one of numbers and the alphabet.

59. The disc according to Claim 55 **characterized in that** said identification information provided so as to be visible from outside is provided on a sticker adhered to said main body.

60. The semiconductor recording device according to Claim 55 **characterized in that** said identification information provided so as to be visible from outside is displayed as a bar code.

61. The semiconductor recording device according to Claim 55 **characterized in that** said identification information stored in said memory means is composed of a combination of N digits of characters, and said identification information provided so as to be visible from outside is composed of a combination of the last M digits (where M < N) of characters of the combination of said N digits of characters including the very last digit.
